(19) Europäisches Patentamt
European Patent Office
Office européen des brevets

(11) **EP 4 428 067 A1**

(12) **EUROPEAN PATENT APPLICATION**
published in accordance with Art. 153(4) EPC

(43) Date of publication:
**11.09.2024 Bulletin 2024/37**

(21) Application number: **22890298.7**

(22) Date of filing: **28.10.2022**

(51) International Patent Classification (IPC):
**B65G 43/08** *(2006.01)*

(52) Cooperative Patent Classification (CPC):
**B65G 43/08**

(86) International application number:
**PCT/KR2022/016748**

(87) International publication number:
**WO 2023/080567 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.11.2021 KR 20210152518**

(71) Applicant: **LG Energy Solution, Ltd.
Seoul 07335 (KR)**

(72) Inventors:
• **CHUNG, Moonkoo
Daejeon 34122 (KR)**
• **YANG, Seongyeol
Daejeon 34122 (KR)**

(74) Representative: **Hoffmann Eitle
Patent- und Rechtsanwälte PartmbB
Arabellastraße 30
81925 München (DE)**

(54) **TRANSPORT APPARATUS FOR TRANSFERRING BATTERY AND CONTROL METHOD THEREFOR**

(57) Disclosed are a transport device for moving batteries and a control method thereof. The transport device for conveying batteries according to the present disclosure comprises a tray which carries batteries while moving along a conveyor belt, a shock sensor that is disposed at the tray, and senses an amount of shock transferred to the tray, a recognized member that is installed along a path of the tray, a reader that is disposed at the tray, and recognizes the recognized member, and a controller that receives values measured by the shock sensor and the reader and stores the values in a server, and in a section in which a predetermined value or greater of shock is transferred to the tray, decreases a speed of movement of the tray.

【FIG. 1】

**Description**

[Technical Field]

This application claims priority to and the benefit of Korean Patent Application No. 10-2021-0152518, filed on November 08, 2021, the disclosure of which is incorporated herein by reference in its entirety.

The present disclosure relates to a transport device for moving batteries and a control method thereof, and in particular, a transport device for moving batteries and a control method thereof that ensure a reduction in the amount of shock transferred to a tray conveying batteries.

[Background Art]

Ordinarily, batteries convert chemical energy to electric energy. Two or more cells connect, and current flows in the same direction, to form a battery.

Batteries are produced through a variety of processes, and move for each process in the state where the batteries are contained in a tray.

The tray containing the batteries moves at a constant speed in a product line where each process proceeds. The transport path of the tray on which the batteries are stacked is not always gentle and smooth. The tray moving at a constant speed is not affected by a shock in one area but is affected in another area. A shock transferred to the tray during transportation can damage the batteries stacked on the tray.

In the area where a shock is predicted while the tray moves, e.g., the area where there is a stopper, the speed of the tray can decrease in advance, such that the shock affecting the tray can lessen. However, in the area where a shock cannot be predicted, the tray cannot help being affected by the shock.

Additionally, as time passes, transport devices such as a conveyor belt wear. Thus, another shock can be generated in the area where no shock is generated previously.

To prevent the batteries stacked on the tray from being damaged by an unpredicted shock, an amount of shock affecting the tray during transportation needs to be sensed continuously.

The background art of the present disclosure is disclosed in KR Patent Publication No. 2020-0087562 (July 21, 2020), titled a tray for transferring a battery.

[Description of Invention]

[Technical Problems]

The obj ective of the present disclosure is to provide a transport device for moving batteries and a control method thereof that can ensure a reduction in the amount of shock transferred to a tray conveying batteries.

The obj ective of the present disclosure is to provide a transport device for moving batteries and a control method thereof that can adjust the speed of movement of a tray in the case where the tray moves to a point where a large amount of shock is generated.

The objective of the present disclosure is to provide a transport device for moving batteries and a control method thereof that can adjust the speed of movement of a tray in the case where the tray moves to the point where a very small amount of shock is generated, or the tray moves in the area where no shock is generated.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

[Technical Solutions]

A transport device for moving batteries and a control method thereof, according to the present disclosure, can adjust the speed of movement of a tray, to reduce the amount of shock transferred to a tray conveying batteries.

Specifically, according to the present disclosure, a path of movement of a tray is divided into a plurality of areas, and in the section where a large amount of shock is transferred to the tray, the speed of movement of the tray decreases, to reduce damage to batteries in the tray.

Further, according to the present disclosure, in the area where a tray is not affected by a shock, the speed of movement of the tray increases, to speed up the conveyance of batteries.

A transport device for moving batteries in one embodiment comprises a tray which conveys batteries while moving along a conveyor belt, a shock sensor that is disposed at the tray, and senses an amount of shock transferred to the tray, one or more recognized members that are installed along a path of the tray, a reader that is disposed at the tray, and recognizes the one or more recognized members, and a controller that receives values measured by the shock sensor and receive recognized member information from the reader and stores the values in a server, determines a movement area from among the plurality of movement areas in which a predetermined amount of shock or greater is transferred to the tray based on the received values and recognized member information, and decreases a speed of movement of the tray at the determined movement area.

The one or more recognized members are a radio-frequency identification (RFID) tags, and the reader uses a sensor recognizing RFID tags.

Additionally, the one or more recognized members may be a plurality of recognized members, whereby each recognized member is installed at a respective movement area of the plurality of movement areas.

The controller determines an amount of shock transferred to the tray in the server, in relation to each of the movement areas.

The controller calculates a shock area in which a predetermined amount or greater of shock is transferred to the tray, based on information stored in the server, and in the shock area, deceases the speed of movement of the tray.

A control method of a transport device for moving batteries in one embodiment comprises dividing, by a controller, a path of a tray into a plurality of movement areas, recognizing, by a reader disposed at the tray, a recognized member installed areas along the path of the tray, sensing, by a shock sensor disposed at the tray, an amount of shock transferred to the tray, receiving, by the controller, values measured by the shock sensor and recognized member information from the reader, and adjusting, by the controller, a speed of movement of the tray being moved along the path by a conveyance device, based on the received values and recognized member information.

The recognized member is a radio-frequency identification (RFID) tag, and the reader uses a sensor recognizing an RFID tag.

The method further includes assigning, by the controller, a corresponding identification number to each respective movement area of the plurality of movement areas, determining, for each respective movement area, an amount of shock in the respective movement area, and storing, for each respective movement area, the determined amount of shock together with the corresponding identification number of the respective movement area.

Sensing the amount of shock transferred to the tray includes calculating, by the controller, the amount of shock as a value from 0 to 1000, and storing a weight-calculated average of the amount of shock, wherein the weight-calculated average for a given shock measurement is calculated by putting weight to immediately preceding shock measurement.

The method further includes displaying, by the controller, the plurality of movement areas in a hazard map form, based on weight-calculated averages for each movement area and corresponding identification numbers stored in the server, and adjusting the speed of movement of the tray, based on information on the amount of shock transferred to the tray displayed in the hazard map.

[Advantageous Effects]

In a transport device for moving batteries and a control method thereof according to the present disclosure, a controller decreases the speed of movement of a tray in the section where a large amount of shock is generated, thereby minimizing damage to batteries in the tray and reducing a ratio of defective batteries.

In the transport device for moving batteries and the control method thereof, the speed of movement of a tray increases in the area where almost no shock is generated or a shock rarely increases despite an increase in the speed of the tray, thereby enhancing the tray's efficiency of transporting batteries.

In the transport device for moving batteries and the control method thereof, a weight-calculated average is calculated by giving weight to an amount of immediately preceding shock transferred to a tray, thereby reducing the amount of the shock transferred to the tray and a ratio of defective batteries.

Specific effects are described along with the above-described effects in the section of detailed description.

[Brief Description of Drawings]

FIG. 1 is a perspective view showing a transport device for moving batteries in one embodiment.
FIG. 2 is a block diagram showing the transport device for moving batteries in one embodiment.
FIGS. 3 and 4 are views respectively showing examples of a recognized member and a conveyance device that are disposed in a path of a transport device for moving batteries.
FIG. 5 is a view showing that a shock area is included in a first path in one embodiment.
FIG. 6 is a view showing that a shock area is included in a second path in one embodiment.
FIG. 7 is a flowchart showing a control method of a transport device for moving batteries in one embodiment.

[Description of reference numerals]

1: Transport device for moving batteries 5: Conveyor belt 10: Tray 20: Shock sensor 30: Recognized member 40: Reader 50: Controller 60: Server 70: Hazard map 80: Path 82,83: Shock area 84: Identification number 86: Weight-calculated average 100: Battery L1: First path L2: Second path S10: Division step S20: Measurement step S30: Storage step S40: Adjustment step

[Detailed Description of Exemplary Embodiments]

The above-described aspects, features and advantages are specifically described hereafter with reference to the accompanying drawings such that one having ordinary skill in the art to which the present disclosure pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

When any one component is described as being "in the upper portion (or lower potion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

Throughout the disclosure, each component can be provided as a single one or a plurality of ones, unless explicitly stated to the contrary.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

Hereafter, a transport device for moving batteries 1 and a control method thereof in one embodiment are described.

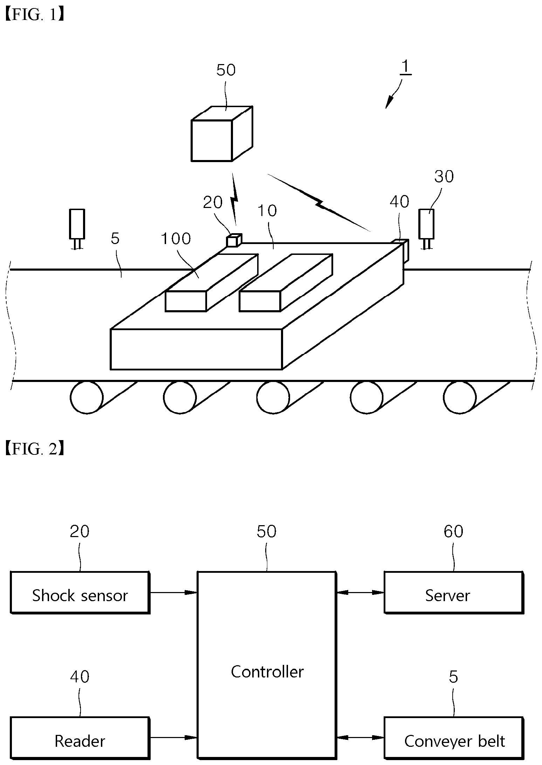

FIG. 1 is a perspective view showing a transport device for moving batteries 1 in one embodiment, and FIG. 2 is a block diagram showing the transport device for moving batteries 1 in one embodiment.

As illustrated in FIGS. 1 and 2, the transport device for moving batteries 1, according to the present disclosure, may be modified in various different forms within the technical scope in which failure of a battery 100, caused by a shock that is generated when a tray 10 moves, is prevented.

The transport device for moving batteries 1 in one embodiment comprises a conveyor belt 5, a tray 10, a shock sensor 20, a recognized member 30, a reader 40, a controller 50 and a server 60.

The conveyor belt 5 is a mechanical one that conveys goods or materials from one point to another. The conveyor belt 5 operates by using the power of a motor, and moves a tray 10 placed at the upper side of the conveyor belt 5 to a predetermined place. Additional description of a detailed configuration of the conveyor belt 5 is omitted since the configuration of the conveyor belt 5 is publicly known.

In the embodiment, the conveyor belt 5 is provided as an example of the conveyance device. However, in the present disclosure, an applicable conveyance device is not limited to a conveyor belt. In addition to a conveyance belt, various types of conveyance devices capable of moving goods or materials from one point to another can be applied.

The tray 10 moves along the conveyor belt 5, and a battery 100 is held, transferred, loaded or mounted in the tray 10. The tray 10 may be modified in various different forms within the technical scope in which the tray 10 conveys a battery 100. The tray 10 in one embodiment may be provided with a groove for mounting a battery 100. The battery 100 is inserted into the groove formed at the tray 10 and moves together with the tray 10.

In the embodiment, the tray 10 is illustrated as a means of loading a transported object (goods or materials; batteries), for example. However, a loading device applicable in the present disclosure is not limited to a tray. In addition to a tray, various types of loading devices capable of carrying goods or materials from one point to another, such as a vacuum absorber or a magnetic force absorber and the like, may be used.

The shock sensor 20 is disposed at the tray 10, and may be modified in various different forms within the technical scope in which the shock sensor 20 senses an amount of shock delivered to the tray 10.

The shock sensor 20 is an element that generates voltage or current as an instant shock or vibration is applied. The shock sensor 20 may be categorized into two groups. The first group of shock sensors 20 is an ON/OFF-type one-axis acceleration sensor, and its output is not proportional to acceleration. The first group of shock sensors 20 operate an inner switch when acceleration reaches a certain value.

The second group of shock sensors 20 is a piezoelectric element-type accelerometer, and its output is proportional to an applied shock.

Another group of shock sensors 20 has a structure in which a spring in a shock senor 20 senses a shock, and may measure whether there is a shock.

In addition to the above-mentioned sensors, various types of sensors capable of sensing an amount of shock or whether there is a predetermined amount or greater of shock may be applied.

The shock sensor 20 may directly deliver a value measured by the shock sensor 20 to the controller 50, since the shock sensor 20 directly communicates with the controller 50. Alternatively, the tray 10 may be provided with an additional communication module, such that a value measured by the shock sensor 20 and the reader 40 is delivered to the controller 50 through the communication module.

The recognized member 30 is disposed along the path of the tray 10 and recognized by the reader 40. In one embodiment, the path in which the tray 10 moves is divided into a plurality of movement areas 80, and then the recognized member 30 is installed in every movement area 80.

The recognized member 30 is used to specify the area in which the tray 10 moves currently, and is installed in a way that the recognized member 30 is recognized by the reader 40 readily and rapidly.

The recognized member 30 in one embodiment is a radio-frequency identification (RFID) tag. The RFID tag is installed in each section of the movement area 80 of the tray 10.

The IC chip built into the RFID tag is activated, signalizes information in the chip, and sends a signal to the antenna of the tag. The reader 40 receives the information signal sent from the RFID tag through the antenna, and delvers the information signal to the controller 50 or the server 60, based on wired and wireless communication.

In the embodiment, an RFID is provided as an example of the recognized member, but the recognized member is not limited. That is, various types of recognized members may be applied depending on readers that recognize the recognized members.

The reader 40 is disposed at the tray 10, and may be modified in various different forms within the technical scope in which the reader 40 recognizes the recognized member 30. The reader 40 in one embodiment is a sensor that recognizes an RFID tag.

The shock sensor 20 and the reader 40 disposed at the tray 10 operate, measure an amount of shock delivered to the tray 10 in real time, and then deliver information on the RFID tag and information on the amount of shock to the server 60 through the controller 50.

The reader 40 may be managed and repaired readily since the reader 40 is detachably fixed to a lateral surface of the tray 10. Additionally, the recognized member 30 that is recognized by the reader 40 may be fixedly installed in work places, and a plurality of recognized members 30 is installed respectively in predetermined places.

The controller 50 receives the value measured by the shock sensor 20 and the reader 40, and store the same in the server 60, and may be modified in various different forms within the technical scope in which the controller 100 reduces the speed of movement of the tray 10 in the section where a predetermined value or greater of a shock is transferred to the tray 10.

The controller 50 divides the path in which the tray 10 moves into a plurality of movement areas 80, and stores the amount of shock that is transferred to the tray 10 in every movement area 80, in the server 60.

For example, in the case where the tray 10 moves ten times, an amount of shock is measured each time the tray 10 moves, and the amount of shock is stored in the server 60.

The controller 50 calculates a shock area 82 in which a predetermined amount or greater of shock is transferred to the tray 10, based on the information stored in the server 60, and reduces the speed of movement of the tray 10 in the shock area 82.

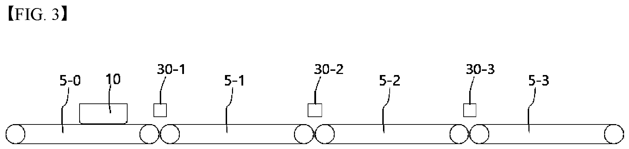

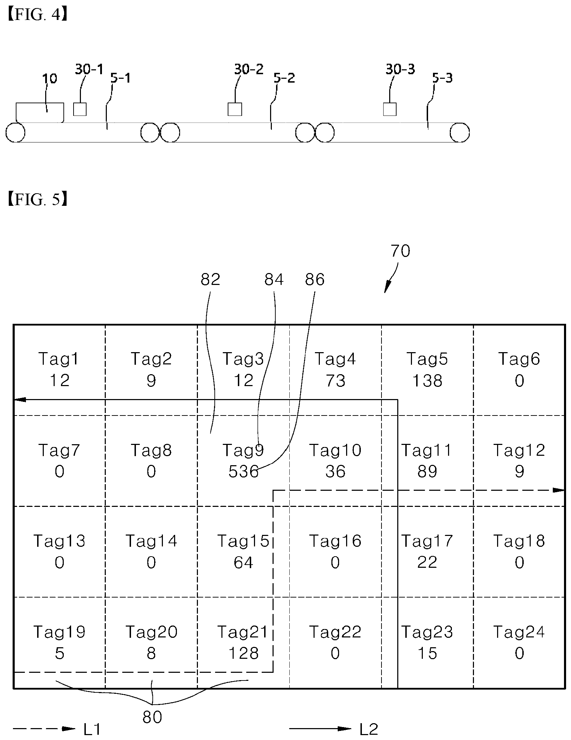

Referring to FIGS. 3 and 4, in a path of the tray 10, where a first recognized member 30-1, a second recognized member 30-2, and a third recognized member 30-3 are placed in order, if the reader 40 of the tray 10 recognizes the fist recognized member 30-1, and then the shock sensor 20 of the tray 10 measures a predetermined reference amount or greater of shock before the reader 40 recognizes the second recognized member 30-2, the amount of shock is stored in the server 60. The predetermined reference amount of shock may be a maximum allowable shock that causes no damage to a battery. Additionally, if the reader 40 of the tray 10 recognizes the second recognized member 30-2, and the shock sensor 20 of the tray 10 measures the predetermined reference amount or less of shock before the reader 40 recognizes the third recognized member 30-3, the amount of shock is stored in the server 60.

Then, in the case where a following tray 10 moves in the path, as the reader 40 of the following tray 10 recognizes the first recognized member 30-1, the controller 50 decrease the speed of the conveyor belt 5 until the reader 40 of the following tray 10 recognizes the second recognized member 30-2, and increases the speed of the conveyor belt 5 to the original speed, as the reader 40 of the following tray 10 recognizes the second recognized member 30-2 again.

In the expansion of this concept, to enhance transport efficiency, the controller 50 may increase the speed of the conveyor belt 5 to a speed greater than the original speed, in the area where an amount of shock measured by the shock sensor 20 of the tray 10 is much less than the predetermined reference amount of shock, e.g., a maximum allowable amount of shock.

When the area which is divided by the recognized members substantially corresponds to or matches the area where the speed of the conveyance device is independently controlled, transport efficiency improves further.

If a first conveyance device 5-1, the speed of which is controllable independently with respect to the conveyance devices 5-0, 5-2, 5-3 in the other areas, is installed in an area between the first recognized member 30-1 and the second recognized member 30-2, and a second conveyance device 5-2, the speed of which is controllable independently with respect to the conveyance devices 5-0, 5-1, 5-3 in the other areas, is installed in a area between the second recognized member 30-2 and the third recognized member 30-3, as illustrated in FIG. 3, the speed of the conveyance device is controllable independently in each area that is divided by the recognized members. Accordingly, the adjustment of speed in any one area does not affect the adjustment of speed in another area.

Specifically, a conveyance device may be configured in a way that a first conveyor belt the speed of which is controllable independently is installed between a first RFID and a second RFID, and a second conveyor belt the speed of which is controllable independently is installed between the second RFID and a third RFID.

The above configuration may be applied in the case where a conveyance device is fixedly installed in a predetermined area, and a loading device for a transported object is moved by the conveyance device. That is, in the case where the tray 10 moves by riding on the conveyor belt 5, the tray 10 does not move on its own, and is carried by the conveyor belt 5. That is, the tray 10 is conveyed by the conveyor belt 5 as a conveyance device.

However, in the technical scope of the present disclosure, the areas divided by the recognized members do not need to correspond to or match the areas in which the speed of the conveyance device is independently controllable, substantially.

Even if a portion of the first conveyance device 5-1 and a portion of the second conveyance device 5-2 are disposed between the first recognized member 30-1 and the second recognized member 30-2, and a portion of the second conveyance device 5-2 and a portion of the third conveyance device 5-3 are disposed between the second recognized member 30-2 and the third recognized member 30-3, as illustrated in FIG. 4, the subject matter of the present disclosure is certainly applicable. Even in the above arrangement, the controller 50 can increase the speed of the first conveyance device 5-1 and the second conveyance device 5-2, as the tray 10 recognizes the first recognized member 30-1, and control the speed of the second conveyance device 5-2 and the third conveyance device 5-3 to the original speed, as the tray 10 recognizes the second recognized member 30-2.

Even if a conveyance device is disposed at the loading device for a transported object, the subject matter of the present disclosure is applicable. Even in the case of a transport device for moving batteries, where a tray 10 is provided with a motor and wheels such that the tray 10 moves on its own, control can be performed as described above. That is, as the tray 10 recognizes the first recognized member 30-1, the controller 50 can control the motor of the tray 10 to decrease the speed of movement of the tray 10, and as the tray 10 recognizes the second recognized member 30-2, the controller 50 can control the motor of the tray 10 to increase the speed of movement of the tray 10 to the original speed.

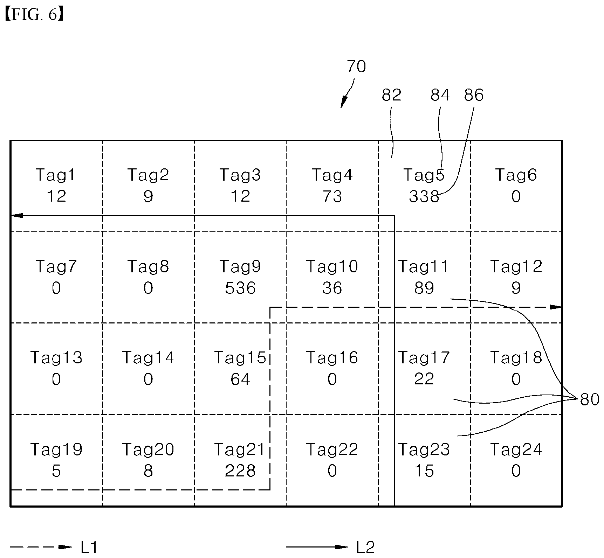

FIG. 5 is a view showing that a shock area 82 is included in a first path L1 in one embodiment, and FIG. 6 is a view showing that a shock area 82 is included in a second path L2 in one embodiment.

As illustrated in FIGS. 2 to 6, the controller 50 displays a movement area 80, in the form of a hazard map 70, based on a weight-calculated average 86 and an identification number 84 that are stored in the server 60. Additionally, the controller 50 adjusts the speed of movement of the tray 10, based on information on an amount of shock displayed in the hazard map 70.

The controller 50 divides a work space in which the tray 10 moves into a plurality of sections, and gives an identification number 84 to each movement area 80. Then the controller 50 inputs a weight-calculated average 86 in association with the identification number 84.

The controller 50 calculates an amount of shock transferred to the tray 10 as values from 0 to 1000, and stores a weight-calculated average 86 in which an amount of immediately preceding shock is calculated by putting weight, in the server 60.

For example, in the case where a weight-calculated average 86 is "536" in a movement area 80 input as an identification number 84 of "Tag9", the controller 50 associates "Tag9" and "536" and stores the same in the server 60.

$$I = \alpha \times I_t + (1-\alpha) \times \frac{I_{t-1} + I_{t-2} + \cdots\cdots + I_1}{N} \quad (0.7 \leq \alpha \leq 1)$$

[Formula 1]

Formula 1 is to calculate an amount of shock I that is a weight-calculated average 86. In formula 1, $\alpha$ denotes weight, N denotes a value that is calculated by deducting 1 from a total number of measurement of an amount of shock, and t denotes the number of measurement of an amount of shock.

In formula 1, It denotes an amount of shock measured last, and weight $\alpha$ is greater than or the same as 0.7 and less than or the same 1.

The amount of shock I that is calculated based on formula 1 described above and is a weight-calculated average 86 is accumulated. Accordingly, even when an amount of shock measured in an instant is abnormally outstanding, the amount of shock is accumulated without being applied immediately.

If the outstanding amount of shock is caused by an error of a sensor and the like, an amount of shock following the amount of shock returns to a normal amount. Accordingly, the outstanding data value has almost no or no effect on control.

If the outstanding amount of shock is caused by a change in a facility or damage to a facility and the like, the outstanding amount of shock is continuously accumulated and reflected, and affects control.

At this time, the amount of shock I that is calculated based on formula 1 described above and is a weight-calculated average 86 gives large weight to an amount of immediately preceding shock, such that the controller responds to a changing work environment rapidly.

Further, the tray 10 may move in the first path L1, and when necessary, may move in the second path L2 different from the first path L 1. If the path of the tray 10 changes, a shock affecting the tray 10 in a certain movement area 80 may be the same or similar.

If the path of the tray 10 changes, a shock area 82 of the first path L1 and a shock area 83 of the second path L2 may differ from each other.

Even if the path of the tray 10 changes, the controller 50 determines the speed of movement of the tray 10, with reference to a weight-calculated average 86 and a shock area 82 and the like that are stored in relation to each movement area 80.

As illustrated in FIGS. 1 to 6, the controller 50 databases information on amounts of shock that are measured while the tray 10 passes the recognized member 30, for all the space, and then store the information in the server 60.

Additionally, the controller 50 may adjust the speed of movement of the tray 10 by applying an algorithm for reducing a speed, when the tray 10 moves to a point affected by a large amount of shock.

The controller 50 displays an amount of shock within values of 0 to 1000. When storing an amount of shock in the server 60, the controller 50 stores a weight-calculated average 86, by giving large weight to an amount of immediately preceding shock. Thus, great importance is put on updated data.

$$V_t = V_{t-1} \times \log_{1000}(1000 - \gamma \times I)$$

[Formula 2]

In formula 2, Vt denotes the tray 10's speed to be changed, $V_{t-1}$ denotes the tray 10's current speed, $\gamma$ denotes a weight parameter of an amount of shock, and I denotes an amount of shock in a corresponding section of the movement area 80.

For example, in the case where the current speed of the tray 10 is 0.5m/s at a time when the tray 10 moves from Tag15 to Tag9, Vt is calculated as 0.38m/s.

Accordingly, the tray 10 may travel at a speed of 0.38m/s that is 24% less than 0.5m/s.

Additionally, the controller 50 may create a hazard map 90, based on a value that is calculated based on a value stored in the server 60. In the hazard map 70, a unique identification number 84 is given to each section of the movement area 80, and as an average of amounts of shock, a weight-calculated average 86 is recorded in relation to each identification number 84.

Thus, the controller 50 may adjust the speed of movement of the tray 10, based on a weight-calculated average 86 of a movement area 80 corresponding to a next movement point of the tray 10.

The speed of movement of the tray 10 may be adjusted by adjusting the speed of operation of the conveyor belt 5. As the controller 50 controls the speed of rotation of the motor provided at the conveyor belt 5, the speed of movement of the tray 10 is adjusted.

The controller 50 may form a zone comprised of a plurality of movement areas 80 along a path of movement of the tray 10, and set an area in which a weight-calculated average 86 is a predetermined value or greater, to a shock area 82, among the plurality of movement areas 80.

For example, in the case where an area in which a weight-calculated average 86 is 300 or greater is set as a shock area 82, the movement area 80 of Tag9 in FIG. 5 is set to a shock area 82. Accordingly, the controller 50 decreases the speed of the tray 10 moving in the shock area 82, to lessen a shock transferred to the tray 10.

According to the present disclosure, an amount of shock is accumulated in a way that a recently measured value is mainly reflected by a weight-calculated average 86. Thus, as time passes, wear on the conveyance device and the like, and a change in the amount of shock caused by a renewal of the conveyance device based on management and repairs can be smoothly dealt with.

For example, in the case where results of an increase in the amount of shock generated in the movement area of Tag5, as time passes from the time point when the hazard map 70 in FIG. 5 is created, are updated as illustrated FIG. 6, the movement areas 80 of Tag9 and Tag5 in which a weight-calculated average 86 is 300 or greater may be set to a shock area 82. According to the present disclosure, the current situation of the transport device for moving batteries 1 can be properly controlled.

In one embodiment, one shock sensor 20 and one reader 40 are provided, for example. However, even if two or more shock sensors 20 and readers 40 are provided, the objectives of the present disclosure can be achieved, certainly.

Though not illustrated, the server 60 and the controller 50 may be installed integrally, and the position and number of the servers 60 may vary.

Hereafter, a control method of a transport device for moving batteries 1 in one embodiment is described with reference to the accompanying drawings.

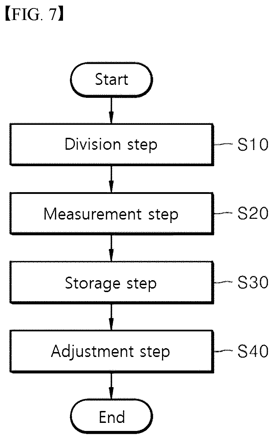

FIG. 7 is a flowchart showing a control method of a transport device for moving batteries 1 in one embodiment.

As illustrated in FIG. 7, the control method of a transport device for moving batteries 1 in one embodiment comprises a division step (S10) in which a controller 50 divides a path of a tray 10 into a plurality of movement areas 80.

The controller 50 divides the space in which the tray 10 moves into a plurality of movement areas 80, and a recognized member 30 is installed in each movement area 80.

Additionally, the control method comprises a measurement step (S20) in which a reader 40 disposed at the tray 10 measures the recognized member 30 installed in the movement area 80, and a shock sensor 20 disposed at the tray 10 senses an amount of shock transferred to the tray 10.

Since the shock sensor 20 and the reader 40 are disposed at the tray 10 moving along a conveyor belt 5, the shock sensor 20 measures a shock transferred to the tray 10 and delivers the measurements to the controller 50.

The reader 40 measures the recognized member 30 and delivers a movement area 80 in which the tray 10 passes to the controller 50.

Additionally, the control method comprises a storage step (S30) in which the controller 50 receives values measured by the shock sensor 20 and the reader 40 and stores the values in a server 60.

The controller 50 divides the values measured by the reader 40 and the shock sensor 20, in relation to each movement area 80, and stores the values in the server 60.

Additionally, the control method comprises a adjustment step (S40) in which the controller 50 adjusts the speed of movement of the tray 10, based on the measured values stored in the storage step.

The controller 50 calculates the speed of movement of the tray 10 by using formula 2, and then adjusts the speed of movement of the conveyor belt 5. Accordingly, since the speed of movement of the tray 10 decreases in a shock area 82, a shock transferred to the tray 10 may decrease.

The controller 50 may predict a shock that may cause failure of a battery 100, and control the speed of movement of the tray 10.

Since the controller 50 according to the present disclosure decreases the speed of movement of the tray 10 in a section where there is a large amount of shock, as described above, damage to a battery 100 in the tray 10 may be minimized, and a ratio of defective batteries 100 may decrease.

Further, since a weight-calculated average 86 is calculated by giving weight to an amount of immediately preceding shock transferred to the tray 10, an amount of shock transferred to the tray 10 and a ratio of defective batteries 100 may decrease.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the scope of the disclosure though not explicitly described in the description of the embodiments.

**Claims**

1. 1. A transport device for moving batteries, comprising:

   a tray in which a battery is loaded, and which is configured to move along a path comprising a plurality of movement areas;
   a shock sensor that is disposed at the tray, and is configured to sense an amount of shock transferred to the tray;
   one or more recognized members that are installed along the path of the tray;
   a reader that is disposed at the tray, and configured to recognize the one or more recognized members; and
   a controller configured to:

   receive values measured by the shock sensor;
   receive recognized member information from the reader;
   determine a movement area from among the plurality of movement areas in which a predetermined amount of shock or greater is transferred to the tray based on the received values and recognized member information, and
   decrease a speed of movement of the tray at the determined movement area.

2. The transport device of claim 1, wherein the one or more recognized members are radio-frequency identification (RFID) tags, and the reader uses a sensor configured to recognize RFID tags.

3. The transport device of claim 1, wherein the one or more recognized members is a plurality of recognized members and wherein each recognized member is installed at a respective movement area of the plurality of movement areas.

4. The transport device of claim 3, wherein the controller is configured to determine an amount of shock transferred to the tray in relation to each of the plurality of movement areas.

5. The transport device of claim 4, wherein the controller is configured to

   receive the shock information from the server, and
   determine the determined movement area in which the predetermined amount of shock or greater is transferred to the tray, based on the received shock information.

6. A control method of a transport device for moving batteries, comprising
   dividing, by a controller, a path of a tray into a plurality of movement areas;

   recognizing, by a reader disposed at the tray, a recognized member installed areas along the path of the tray,
   sensing, by a shock sensor disposed at the tray, an amount of shock transferred to the tray;
   receiving, by the controller, values measured by the shock sensor and recognized member information from the reader; and
   adjusting, by the controller, a speed of movement of the tray being moved along the path by a conveyance device, based on the received values and recognized member information.

7. The control method of claim 6, wherein the recognized member is a radio-frequency identification (RFID) tag, and the reader uses a sensor recognizing an RFID tag.

8. The control method of claim 6, further comprising assigning, by the controller, a corresponding identification number to each respective movement area of the plurality of movement areas, determining, for each respective movement area, an amount of shock in the respective movement area, and storing, for each respective movement area, the determined amount of shock together with the corresponding identification number of the respective movement area.

9. The control method of claim 8, wherein sensing the amount of shock transferred to the tray further comprises calculating, by the controller, the amount of shock as a value from 0 to 1000, and storing a weight-calculated average of the amount of shock, wherein the weight-calculated average for a given shock measurement is calculated by putting weight to immediately preceding shock measurement.

10. The control method of claim 9, further comprising displaying, by the controller, the plurality of movement areas in a hazard map form, based on weight-calculated averages for each movement area and corresponding identification numbers stored in the server, and adjusting the speed of movement of the tray, based on information on the amount of shock transferred to the tray displayed in the hazard map.

【FIG. 1】

【FIG. 2】

【FIG. 3】

【FIG. 4】

【FIG. 5】

| Tag1 12 | Tag2 9 | Tag3 12 | Tag4 73 | Tag5 138 | Tag6 0 |
|---|---|---|---|---|---|
| Tag7 0 | Tag8 0 | Tag9 536 | Tag10 36 | Tag11 89 | Tag12 9 |
| Tag13 0 | Tag14 0 | Tag15 64 | Tag16 0 | Tag17 22 | Tag18 0 |
| Tag19 5 | Tag20 8 | Tag21 128 | Tag22 0 | Tag23 15 | Tag24 0 |

- - - → L1          ──── → L2

【FIG. 6】

|  |  |  |  |  |  |
|---|---|---|---|---|---|
| Tag1 12 | Tag2 9 | Tag3 12 | Tag4 73 | Tag5 338 | Tag6 0 |
| Tag7 0 | Tag8 0 | Tag9 536 | Tag10 36 | Tag11 89 | Tag12 9 |
| Tag13 0 | Tag14 0 | Tag15 64 | Tag16 0 | Tag17 22 | Tag18 0 |
| Tag19 5 | Tag20 8 | Tag21 228 | Tag22 0 | Tag23 15 | Tag24 0 |

- - - → L1          ——→ L2

【FIG. 7】

```
                    ( Start )
                       |
                       v
        +-------------------------------+
        |        Division step          |--- S10
        +-------------------------------+
                       |
                       v
        +-------------------------------+
        |      Measurement step         |--- S20
        +-------------------------------+
                       |
                       v
        +-------------------------------+
        |        Storage step           |--- S30
        +-------------------------------+
                       |
                       v
        +-------------------------------+
        |       Adjustment step         |--- S40
        +-------------------------------+
                       |
                       v
                    ( End )
```

## INTERNATIONAL SEARCH REPORT

| International application No. |
| --- |
| **PCT/KR2022/016748** |

**A.    CLASSIFICATION OF SUBJECT MATTER**

**B65G 43/08**(2006.01)i

According to International Patent Classification (IPC) or to both national classification and IPC

**B.    FIELDS SEARCHED**

Minimum documentation searched (classification system followed by classification symbols)

B65G 43/08(2006.01); B25J 19/02(2006.01); B25J 5/00(2006.01); B61K 9/08(2006.01); B65G 43/10(2006.01); G05D 1/02(2006.01); G06K 19/07(2006.01); G06K 7/10(2006.01); H01L 21/677(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 운송 장치(transportation equipment), 트레이(tray), 충격센서 (impact sensor), 리더기(reader), 태그(tag), 서버(server), 이동 속도(travel speed)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2242361 B1 (ZENIX CO., LTD.) 20 April 2021 (2021-04-20) See paragraphs [0035]-[0036], [0040]-[0042], [0045] and [0051]-[0052] and figures 1-3. | 1-8 |
| Y | | 9-10 |
| Y | JP 2020-187485 A (OMRON CORP.) 19 November 2020 (2020-11-19) See paragraphs [0050]-[0051] and [0102], claims 1 and 3 and figures 1 and 9. | 9-10 |
| A | KR 10-0960145 B1 (INATECH CO., LTD.) 27 May 2010 (2010-05-27) See claims 1-2 and 6 and figures 1-3. | 1-10 |
| A | KR 10-2033144 B1 (SEILTECHNOLOGY CO., LTD. et al.) 17 October 2019 (2019-10-17) See claims 1 and 9-10 and figures 1-6. | 1-10 |
| A | US 2019-0130145 A1 (HYUNDAI MOTOR COMPANY et al.) 02 May 2019 (2019-05-02) See claims 1-7 and figures 1-7. | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 February 2023** | **16 February 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/016748**

| Patent document cited in search report | | | Publication date (day/month/year) | Patent family member(s) | | | Publication date (day/month/year) |
|---|---|---|---|---|---|---|---|
| KR | 10-2242361 | B1 | 20 April 2021 | None | | | |
| JP | 2020-187485 | A | 19 November 2020 | None | | | |
| KR | 10-0960145 | B1 | 27 May 2010 | None | | | |
| KR | 10-2033144 | B1 | 17 October 2019 | KR 10-2018-0134661 | | A | 19 December 2018 |
| US | 2019-0130145 | A1 | 02 May 2019 | KR 10-2019-0049107 | | A | 09 May 2019 |
| | | | | KR | 10-2261291 | B1 | 04 June 2021 |
| | | | | US | 10628644 | B2 | 21 April 2020 |

Form PCT/ISA/210 (patent family annex) (July 2022)

**REFERENCES CITED IN THE DESCRIPTION**

**Patent documents cited in the description**

- KR 1020210152518
- KR 20200087562